# DEMANDE DE BREVET EUROPEEN

(11) **EP 4 279 516 A2**
(43) Date de publication de la demande: **22.11.2023**
(21) Numéro de dépôt: 23201817.6
(22) Date de dépôt: 20.05.2021
(51) Int. Cl.: C08F 2/18

(54) **COMPOSITION AQUEUSE SOUS FORME D'EMULSION COMPRENANT AU MOINS UN PEROXYDICARBONATE ET AU MOINS UN PEROXYESTER**

(30) Priorité: 20.05.2020 FR 2005306
(62) Demande divisionnaire de: 21733493.7
(71) Demandeur: ARKEMA FRANCE, 92700 Colombes (FR)
(72) Inventeur: TARTARIN, Isabelle, 60280 VENETTE (FR); BRANDHORST, Markus, 69490 PIERRE-BENITE (FR); DISSON, Jean-Pierre, 69490 PIERRE-BENITE (FR); LOHR, Juergen, 89312 GUNZBURG (DE)
(74) Mandataire: Arkema Patent

(57) **Abrégé**

La présente invention concerne une composition aqueuse sous forme d'émulsion comprenant au moins un peroxydicarbonate et au moins un peroxyester, de préférence au moins un hydroxyperoxyester.

L'invention se rapporte aussi à l'utilisation d'une composition aqueuse comprenant le mélange de peroxydes organiques, tels que définis ci-avant, pour la polymérisation ou la copolymérisation d'un ou plusieurs monomères éthyléniquement insaturés, de préférence halogénés, et plus préférentiellement le chlorure de vinyle.

## Description

La présente invention concerne une composition aqueuse sous forme d'émulsion comprenant au moins un peroxydicarbonate et au moins un peroxyester, de préférence au moins un hydroxyperoxyester.

L'invention se rapporte aussi à l'utilisation d'une composition aqueuse comprenant le mélange de peroxydes organiques, tels que définis ci-avant, pour la polymérisation ou la copolymérisation d'un ou plusieurs monomères éthyléniquement insaturés, de préférence halogénés, et plus préférentiellement le chlorure de vinyle.

La présente invention a aussi trait à un polymère vinylique halogéné obtenu par polymérisation d'au moins un monomère éthyléniquement insaturé halogéné en présence du mélange de peroxydes organiques tels que définis ci-avant.

Les peroxydes organiques, sous forme liquide ou solide, sont couramment utilisés en tant qu'amorceurs de polymérisation de monomères à insaturation éthylénique pour la synthèse de différents types de polymères.

Toutefois, leur mise en oeuvre pose fréquemment un certain nombre de problèmes. En effet, les peroxydes organiques constituent le plus souvent des espèces fortement instables car elles se décomposent relativement aisément sous l'action d'un faible apport de chaleur, d'énergie mécanique (friction ou choc) ou de contaminants incompatibles. Ainsi, en cas d'élévation incontrôlée de leur température de stockage, certains peroxydes organiques peuvent subir une décomposition exothermique autoaccélérée pouvant entraîner des incendies et/ou des explosions violentes. En outre, dans ces conditions, certains de ces peroxydes organiques peuvent libérer des vapeurs combustibles susceptibles de réagir avec toute source d'ignition ce qui peut augmenter, voire accélérer, de manière drastique les risques d'explosion violente. Il en résulte qu'il est important de prendre des mesures de précautions adéquates en termes de sécurité lors du stockage et du transport des peroxydes organiques.

Afin de pallier à ces inconvénients, les peroxydes organiques sont notamment conditionnés sous la forme d'émulsions aqueuses comprenant des antigels. Ainsi la présence d'eau permet à la fois d'absorber et de dissiper l'énergie générée en cas de décompositions exothermiques des peroxydes organiques tandis que l'antigel a pour rôle de maintenir l'émulsion sous forme liquide, à des températures inférieures à - 10°C, généralement inférieures à -15°C, ce qui permet de limiter les risques d'une décomposition exothermique involontaire des peroxydes organiques.

Les émulsions aqueuses contiennent généralement en outre un émulsifiant ayant l'avantage d'abaisser la tension interfaciale entre la phase aqueuse et le peroxyde organique afin de faciliter sa dispersion sous forme de gouttelettes et de maintenir la taille de ces dernières dans le temps. En effet, au cours du temps, les gouttelettes de peroxyde peuvent s'agglomérer entre elles provoquant une augmentation de leur taille moyenne et de leur taille maximale ce qui peut conduire, dans certains cas, à une séparation de phase totale ou partielle et, par conséquent, à une déstabilisation globale de l'émulsion.

Au vu de ce qui précède, les émulsions aqueuses de peroxyde organique doivent donc être stables pour des questions de sécurité non seulement au cours de leur production mais également lors d'une période relativement longue correspondant à leur transport et à leur stockage avant d'être utilisées en tant qu'initiateurs de polymérisation. Pour ce faire, les gouttelettes de peroxyde organique doivent présenter principalement une taille moyenne et une taille maximale faibles et stable dans le temps.

Par ailleurs, il est primordial d'obtenir des émulsions homogènes. En effet, l'utilisation d'émulsions de peroxyde organique non homogènes, i.e. ayant une différence significative de concentration en peroxyde organique répartie entre la partie supérieure et la partie inférieure de la phase aqueuse, peut aussi engendrer des différences de concentrations non prévisibles d'initiateurs dans le réacteur de polymérisation.

En outre, les étapes de déchargement de l'émulsion dans des silos intermédiaires de stockage, de pompage et d'introduction d'une émulsion de peroxyde organique dans un réacteur de polymérisation sont des étapes importantes pour la qualité du polymère obtenu et la fiabilité du procédé de polymérisation. Ces étapes de manutention doivent être effectuées le plus rapidement possible. Pour se faire, il est important que l'émulsion de peroxyde présente une viscosité faible de sorte que l'écoulement de l'émulsion soit facilité au maximum. Ainsi une émulsion de peroxyde organique doit avoir une viscosité dynamique maximale autour de 500-700 mPa.s à basse température, typiquement de l'ordre de -10°C pour une vitesse de cisaillement de 100 s⁻¹. Les mesures de viscosité dynamique sont réalisées à l'aide de cylindres coaxiaux qui créent le cisaillement, par exemple selon la norme DIN 53019.

Or l'homme du métier sait que, pour ce type d'émulsion, chercher à diminuer la taille des gouttelettes contribue à augmenter la viscosité (voir paragraphe 1.4 de l'article de JP Canselier et M.Poux, « Procédés d'émulsification - Mécanisme de formation des émulsions » Techniques de l'Ingénieur J2 152, pp 1-12, publication du 10 juin 2004 ).

Plus précisément, le fait de chercher à diminuer la taille des gouttelettes de peroxyde organique et de réduire, dans le même temps, la viscosité des émulsions de peroxyde organique conduit à des effets antinomiques difficiles à concilier.

Afin de répondre à l'ensemble de ces problématiques, il a déjà été développé dans l'art antérieur des émulsions aqueuses de peroxydes organiques comprenant au moins un peroxyde organique, au moins un tensioactif non ionique particulier, en tant qu'agent émulsifiant, par exemple un alcool gras alcoxylé et/ou une huile végétale ou animale alcoxylée éventuellement hydrogénée, et des agents antigels, tels que des alcools, notamment le méthanol.

Cependant, de telles émulsions aqueuses de peroxydes organiques ne se sont pas avérées suffisamment stables au cours du temps. En effet, il a été observé que la taille moyenne ainsi que la taille maximale des gouttelettes de peroxyde augmentaient sensiblement sur une période de temps relativement courte jusqu'à aboutir, dans certains cas, à un déphasage complet de l'émulsion. Certaines de ces émulsions se sont par exemple retrouvées instables en moins de 6 mois, voire en moins de 3 mois, à des températures de l'ordre de -20°C ou de -25°C ce qui rend naturellement leur transport et leur stockage difficiles à entreprendre en toute sécurité.

Ainsi l'un des objectifs de la présente invention est de proposer une composition sous forme d'émulsion aqueuse de peroxyde organique stable et homogène dans le temps, destinée à être utilisée en tant qu'amorceurs de polymérisation, qui ne présente pas les inconvénients précédemment décrits en matière de sécurité et de qualité du produit obtenu.

En particulier, l'un des buts de la présente invention est de proposer une composition d'émulsion aqueuse de peroxyde organique ayant notamment une taille moyenne de gouttelettes faible, notamment inférieure à 10 µm, de préférence inférieure à 5 µm, une distribution de taille homogène, une répartition homogène du peroxyde organique et une taille maximale de gouttelette inférieure à 20 µm, voire inférieure à 15 µm, en particulier inférieure à 5 µm, stables dans le temps, par exemple sur une période de six mois, tout en respectant les conditions requises en matière de viscosité et de temps d'écoulement de l'émulsion.

La présente invention a donc notamment pour objet une composition d'émulsion aqueuse de peroxyde organique comprenant :
- un ou plusieurs peroxydes organiques de formule (I) :

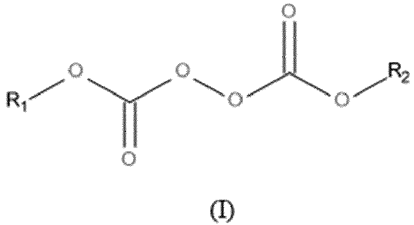

Formule (I) dans laquelle R¹ et R², identiques ou différents, représentent un groupement alkyle en C₁-C₂₀, linéaire, ramifié ou cyclique, pouvant comprendre, de préférence interrompu par, un ou plusieurs hétéroatomes de préférence un ou plusieurs atomes d'oxygène ;
- un ou plusieurs peroxydes organiques de formule (II) :

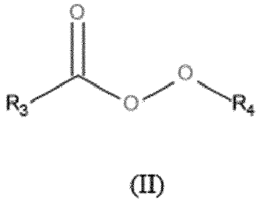

Formule (II) dans laquelle R³ et R⁴, identiques ou différents, représentent un groupement alkyle en C₁-C₂₀, linéaire, ramifié ou cyclique, pouvant comprendre, de préférence interrompu par, un ou plusieurs hétéroatomes, de préférence un ou plusieurs atomes d'oxygène, et/ou éventuellement substitué par un ou plusieurs groupements hydroxyle.

La composition selon l'invention présente ainsi l'avantage d'être stable pendant une durée de 6 mois à une température de l'ordre de -20°C ou de -25°C.

En particulier, la composition selon l'invention est une émulsion aqueuse présentant notamment une taille moyenne de gouttelettes faible, de préférence inférieure à 10 µm, de préférence inférieure à 5 µm, une distribution de taille homogène, une répartition homogène du peroxyde organique et une taille maximale de gouttelette inférieure à 20 µm, voire inférieure à 15 µm, qui sont stables dans le temps, sans apparition de gel, ni déphasage dans les phases organiques et aqueuses.

Plus précisément, la composition selon l'invention présente une taille moyenne de gouttelettes (d₅₀) inférieure à 10 µm après production ou au cours du stockage à une température de -20°C pendant une période de six mois ; la taille maximale de gouttelette (d₁₀₀) ne dépassant pas les 20 µm au cours de cette période.

Par ailleurs, la composition selon l'invention présente l'avantage d'être stable pendant une durée de 6 mois à une température de l'ordre de -20°C ou de -25°C.

Par « homogène », on entend que les peroxydes organiques présentent un faible gradient de concentration. En d'autres termes, les échantillons prélevés à différents endroits de l'émulsion présentent une concentration similaire en peroxydes organiques (i.e. présentent de préférence moins de 5% d'écart absolu, de préférence moins de 3% d'écart absolu, plus préférentiellement moins de 2% d'écart absolu). Ainsi, avantageusement, lorsque la composition selon l'invention est conditionnée dans un récipient de stockage, la différence de concentration en peroxyde organique répartie entre la partie supérieure et la partie inférieure du récipient reste inférieure à 3%, voire inférieure à 2%, dans le temps, notamment sur une période de 6 mois, ce qui permet de garantir la reproductibilité des vitesses de polymérisation.

Cela permet ainsi de prélever la composition selon l'invention aussi bien au niveau de la partie supérieure qu'au niveau de la partie inférieure du récipient afin d'amorcer la polymérisation des monomères à insaturation éthylénique à des vitesses similaires et reproductibles.

Il en résulte que la composition selon l'invention reste efficace au cours du temps.

De plus, la composition selon l'invention présente une viscosité faible, de préférence inférieure à 850 mPa.s, de préférence inférieure à 700 mPa.s, encore de préférence inférieure à 500 mPa.s, ce qui autorise un temps d'écoulement très court.

Les mesures de viscosité dynamique peuvent être réalisées à l'aide de cylindres coaxiaux qui créent le cisaillement, par exemple selon la norme DIN 53019.

Ainsi, la composition selon l'invention peut donc être transportée et stockée en sécurité dans des unités de production de polymères et conduire à des matériaux polymériques de bonne qualité.

A titre de précision, la composition selon l'invention permet d'améliorer la transparence du matériau polymérique final.

L'invention a également pour objet l'utilisation d'une composition aqueuse comprenant le mélange de peroxydes organiques, tels que définis ci-avant, pour la polymérisation ou la copolymérisation d'un ou plusieurs monomères éthyléniquement insaturés, en particulier les monomères vinyliques, de préférence halogénés, et plus préférentiellement le chlorure de vinyle.

La composition aqueuse comprenant le mélange de peroxydes organiques peut donc être utilisée en tant qu'initiateurs de polymérisation pour la synthèse de polymères ou de copolymères obtenus à partir d'un ou plusieurs monomères éthyléniquement insaturés.

Ainsi la composition est compatible avec la polymérisation ou la copolymérisation de monomères éthyléniquement insaturés, de préférence de monomères vinyliques.

En outre, l'invention concerne aussi un polymère vinylique halogéné obtenu par polymérisation d'au moins un monomère éthyléniquement insaturé halogéné en présence de la composition aqueuse contenant le mélange de peroxydes organiques tels que définis ci-avant.

D'autres caractéristiques et avantages de l'invention apparaîtront plus clairement à la lecture de la description et des exemples qui suivent.

Dans ce qui va suivre, et à moins d'une autre indication, les bornes d'un domaine de valeurs sont comprises dans ce domaine.

L'expression « au moins un » est équivalente à l'expression « un ou plusieurs ».

### Composition

Comme indiqué précédemment, la composition selon l'invention comprend un ou plusieurs peroxydes organiques de formule (I) :

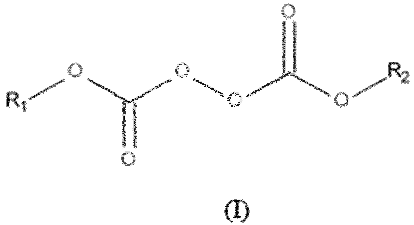

Formule (I) dans laquelle R¹ et R², identiques ou différents, représentent un groupement alkyle en C₁-C₂₀, linéaire, ramifié ou cyclique, pouvant comprendre, de préférence interrompu par, un ou plusieurs hétéroatomes de préférence un ou plusieurs atomes d'oxygène.

De préférence, R¹ et R², identiques ou différents, représentent un groupement alkyle en C₁-C₁₆, plus préférentiellement en C₃-C₁₂, en particulier en C₃-C₁₀, linéaire, ramifié ou cyclique, pouvant comprendre, de préférence interrompu par, un ou plusieurs hétéroatomes, de préférence un ou plusieurs atomes d'oxygène.

De préférence, R¹ et R², identiques ou différents, représentent un groupement alkyle en C₁-C₁₆, plus préférentiellement en C₃-C₁₂, en particulier en C₃-C₁₀, linéaire, pouvant comprendre, de préférence interrompu par, un ou plusieurs hétéroatomes, de préférence un ou plusieurs atomes d'oxygène.

De préférence, R¹ et R², identiques ou différents, représentent un groupement alkyle en C₁-C₁₆, plus préférentiellement en C₃-C₁₂, en particulier en C₃-C₁₀, ramifié, pouvant comprendre, de préférence interrompu par, un ou plusieurs hétéroatomes, de préférence un ou plusieurs atomes d'oxygène.

De préférence, R¹ et R², identiques ou différents, représentent un groupement alkyle en C₃-C₁₆, plus préférentiellement en C₃-C₁₂, en particulier en C₃-C₁₀, cyclique, pouvant comprendre, de préférence interrompu par, un ou plusieurs hétéroatomes, de préférence un ou plusieurs atomes d'oxygène.

Par « groupement alkyle cyclique », on entend au sens de la présente invention que le groupement alkyle comporte un cycle, de préférence aromatique, comprenant de 5 à 6 chainons.

De préférence, l'hétéroatome est un atome d'oxygène.

De préférence, R¹ et R² sont identiques et représentent un groupement alkyle en C₂-C₁₆, en particulier en C₃-C₁₂, encore plus préférentiellement en C₃-C₁₀, linéaire ou ramifié, de préférence ramifié.

Préférentiellement, R¹ et R² sont identiques et représentent un groupement alkyle en C₂-C₈, linéaire ou ramifié, de préférence ramifié.

Les peroxydes organiques de formule (I) sont de préférence choisis dans le groupe constitué par le peroxydicarbonate de di(2-éthylhexyl), le peroxydicarbonate de di-sec-butyl, le peroxydicarbonate de bis(1- méthylheptyl), di-n-propylperoxydicarbonate, di(3-methoxybutyl)peroxydicarbonate, le peroxycarbonate de diéthyle et leurs mélanges, de préférence le peroxydicarbonate de di(2-éthylhexyl) et le peroxydicarbonate de di-sec-butyl.

Avantageusement, le peroxyde organique de formule (I) est choisi dans le groupe constitué par le peroxydicarbonate de di(2-éthylhexyl) vendu sous la dénomination commerciale Luperox^{®} 223 et le peroxydicarbonate de di-sec-butyl vendu sous la dénomination commercial Luperox ^{®} 225.

Comme indiqué précédemment, la composition selon l'invention comprend en outre un ou plusieurs peroxydes organiques de formule (II) :

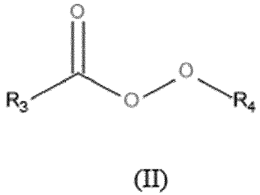

Formule (II) dans laquelle R³ et R⁴, identiques ou différents, représentent un groupement alkyle en C₁-C₂₀, linéaire, ramifié ou cyclique, pouvant comprendre, de préférence interrompu par, un ou plusieurs hétéroatomes, de préférence un ou plusieurs atomes d'oxygène, et/ou éventuellement substitué par un ou plusieurs groupements hydroxyle.

De préférence, R³ et R⁴, identiques ou différents, représentent un groupement alkyle en C₇-C₂₀, de préférence en C₇-C₁₆, en particulier en C₇-C₁₀, linéaire ou ramifié, pouvant comprendre, de préférence interrompu par, un ou plusieurs hétéroatomes, de préférence un ou plusieurs atomes d'oxygène, et/ou éventuellement substitué par un ou plusieurs groupements hydroxyle.

De préférence, R³ et R⁴, identiques ou différents, représentent un groupement alkyle en C₇-C₂₀, de préférence un groupement alkyle en C₇-C₁₆, en particulier en C₇-C₁₀, linéaire, pouvant comprendre, de préférence interrompu par, un ou plusieurs hétéroatomes, de préférence un ou plusieurs atomes d'oxygène, et/ou éventuellement substitué par un ou plusieurs groupements hydroxyle.

De préférence, R³ et R⁴, identiques ou différents, représentent un groupement alkyle en C₇-C₂₀, de préférence un groupement alkyle en C₇-C₁₆, en particulier en C₇-C₁₀, ramifié, pouvant comprendre, de préférence interrompu par, un ou plusieurs hétéroatomes, de préférence un ou plusieurs atomes d'oxygène, et/ou éventuellement substitué par un ou plusieurs groupements hydroxyle.

De préférence, R³ et R⁴, identiques ou différents, représentent un groupement alkyle en C₇-C₂₀, de préférence un groupement alkyle en C₇-C₁₆, en particulier en C₇-C₁₀, cyclique, pouvant comprendre, de préférence interrompu par, un ou plusieurs hétéroatomes, de préférence un ou plusieurs atomes d'oxygène, et/ou éventuellement substitué par un ou plusieurs groupements hydroxyle.

Par « groupement alkyle cyclique », on entend au sens de la présente invention un groupement alkyle, linéaire ou ramifié, comportant en outre un cycle, de préférence aromatique, comprenant de préférence de 5 à 6 chainons.

En d'autres termes, on entend au sens de la présente invention un groupement alkyle cyclique comporte un groupement alkyle, linéaire ou ramifié, de préférence en C₂-C₄, et un cycle, de préférence aromatique, comprenant de préférence de 5 à 6 chaînons.

De préférence, le groupement alkyle cyclique comporte un groupement alkyle ramifié, préférentiellement en C₂-C₄, et un cycle aromatique comprenant de préférence de 5 à 6 chaînons.

De préférence, R³ et R⁴, identiques ou différents, représentent un groupement alkyle, tel que défini précédemment, pouvant être interrompu par un ou plusieurs hétéroatomes, de préférence un ou plusieurs atomes d'oxygène, et/ou éventuellement substitué par un ou plusieurs groupements hydroxyle.

De préférence, R³ et R⁴, identiques ou différents, représentent un groupement alkyle en C₁-C₂₀, linéaire, ramifié ou cyclique, pouvant être éventuellement substitué par un ou plusieurs groupements hydroxyle.

De préférence, R³ représente un groupement alkyle en C₇-C₂₀, de préférence en C₇-C₁₆, en particulier en C₇-C₁₀, linéaire ou ramifié, pouvant comprendre, de préférence interrompu par, un ou plusieurs hétéroatomes, de préférence un ou plusieurs atomes d'oxygène, et R⁴ représente un groupement alkyle en C₁-C₇, de préférence en C₂-C₆, linéaire ou ramifié, éventuellement substitué par un ou plusieurs groupements hydroxyle, ou un groupement alkyle en C₇-C₁₆, en particulier en C₇-C₁₀, cyclique.

De préférence, R³ représente un groupement alkyle en C₇-C₂₀, de préférence en C₇-C₁₆, en particulier en C₇-C₁₀, ramifié, pouvant comprendre, de préférence interrompu par, un ou plusieurs hétéroatomes, de préférence un ou plusieurs atomes d'oxygène, et R⁴ représente un groupement alkyle en C₁-C₇, de préférence en C₂-C₆, ramifié, éventuellement substitué par un ou plusieurs groupements hydroxyle.

De préférence, l'hétéroatome est un atome d'oxygène.

De préférence, dans la formule (II) :
- R³ représente un groupement alkyle en C₇-C₂₀, de préférence un groupement alkyle en C₇-C₁₆, en particulier en C₇-C₁₀, linéaire, ramifié ou cyclique, de préférence ramifié, pouvant être interrompu par un ou plusieurs atomes d'oxygène, de préférence un atome d'oxygène ;
- R⁴ représente :
   i) un groupement alkyle en C₇-C₂₀, de préférence un groupement alkyle en C₇-C₁₆, en particulier en C₇-C₁₀, linéaire ou ramifié, de préférence ramifié, pouvant être interrompu par un ou plusieurs atomes d'oxygène, de préférence un atome d'oxygène ;
   ii) un groupement alkyle en C₁-C₇, de préférence en C₂-C₆, linéaire ou ramifié, de préférence ramifié, éventuellement substitué par un ou plusieurs groupements hydroxyle, ou
   iii) un groupement alkyle en C₇-C₁₀ cyclique, en particulier en C₉, cyclique

Préférentiellement, dans la formule (II), R³ représente un groupement alkyle en C₇-C₂₀, de préférence un groupement alkyle en C₇-C₁₆, en particulier en C₇-C₁₀, linéaire ou ramifié, de préférence ramifié.

Préférentiellement, dans la formule (II), R⁴ représente :
- un groupement alkyle en C₁-C₇, de préférence en C₂-C₆, en particulier en C₄ ou en C₆, linéaire ou ramifié, de préférence ramifié, éventuellement substitué par un ou plusieurs groupements hydroxyle,
- un groupement alkyle en C₇-C₁₀, en particulier en C₉, cyclique.

Préférentiellement, dans la formule (II), lorsque R⁴ représente un groupement alkyle en C₇-C₁₀ cyclique, R⁴ comporte alors un groupement alkyle, linéaire ou ramifié, de préférence ramifié, en C₂-C₄, en particulier en C₃, et un cycle, de préférence aromatique, comprenant de préférence de 5 à 6 chainons

Encore plus préférentiellement, R⁴ représente un groupement alkyle en C₁-C₇, de préférence en C₂-C₆, en particulier en C₆, linéaire ou ramifié, de préférence ramifié, substitué par un ou plusieurs groupements hydroxyle, en particulier un groupement hydroxyle.

Avantageusement, dans la formule (II) :
- R³ représente un groupement alkyle en C₇-C₂₀, de préférence un groupement alkyle en C₇-C₁₆, en particulier en C₇-C₁₀, linéaire ou ramifié de préférence ramifié,
- R⁴ représente un groupement alkyle en C₁-C₇, de préférence en C₂-C₆, linéaire ou ramifié, de préférence ramifié, éventuellement substitué par un ou plusieurs groupements hydroxyle.

Les peroxydes organiques de formule (II) sont de préférence choisis dans le groupe constitué par l'alpha-cumyl peroxyneodécanoate, alpha-cumyl peroxyneoheptanoate, le 2,4,4 triméthylpentyl-2- peroxyneodécanoate, le tert-butyl peroxy n-heptanoate, le tert-butyl peroxynéodécanoate, le alpha-cumyl peroxy n-heptanoate, le ter-amyl peroxy n-heptanoate, le tert-butyl peroxyneoheptanoate, le 2,5-diméthyl-2,5 di (2-éthylhexanoyl peroxy) hexane, le tert-amyl peroxy 2-éthylhexanoate, le tertbutyl peroxy 2-éthylhexanoate, le 1,1,3,3 tétraméthyl butyl-peroxy-2 éthylhexanoate, les hydroxyperoxyesters, le ter-amyl peroxy neodecanoate, 1,1,3,3 tétraméthyl butyl-peroxy neodecanoate, 1,1,3,3 tétraméthyl butyl-peroxy pivalate, le tert-hexyl peroxynéodécanoate, le tert-hexyl peroxypivalate et leurs mélanges.

De préférence, les peroxyesters sont choisis dans le groupe constitué par les hydroxyperoxyesters.

Les hydroxyperoxyesters sont avantageusement choisis dans le groupe constitué par le 4-hydroxy-2-méthylpentylperoxynéodécanoate, le 4-hydroxy-2-méthylpentylperoxynéoheptanoate, le 4-hydroxy-2-méthylpentylperoxy-(2-éthylhexanoate), le 4-hydroxy-2-méthylpentylperoxy-2-phénylbutyrate, le 4-hydroxy-2-méthylpentylperoxy-2-phénoxypropionate, le 4-hydroxy-2-méthylpentylperoxy-(2-butyloctanoate), le 4-hydroxy-2-méthylpentylperoxynéohexanoate, le 4-hydroxy-2-méthylpentylperoxynéotridécanoate, le 4-hydroxy-2-méthylhexylperoxynéohexanoate, le 4-hydroxy-2-méthylhexylperoxynéodécanoate, le 5-hydroxy-1,3,3-triméthylcyclohexylperoxyneodecanoate, le 4-hydroxy-2,6-diméthyl-2,6-di(néohexanoylperoxy)heptane, le 4-hydroxy-2,6-diméthyl-2,6-di(néodecanoylperoxy)heptane, le 3-hydroxy-1,1 diméthylbutylperoxy 2-éthylhexanoate, le 3-hydroxy-1,1 diméthylbutyl peroxyneodécanoate, le 3- hydroxy-1,1 diméthylbutyl peroxyneoheptanoate et leurs mélanges, de préférence le 3-hydroxy-1,1 diméthylbutyl peroxyneodécanoate.

De préférence, le peroxyde organique de formule (II) est choisi dans le groupe constitué par le tert-butyl peroxynéodécanoate, le tert-amyl peroxynéodécanoate, l'alpha-cumyl peroxyneoheptanoate, les hydroxyperoxyesters et leurs mélanges.

De préférence, le peroxyde organique de formule (II) est choisi dans le groupe constitué par le 3-hydroxy-1,1 diméthylbutyl peroxyneodécanoate, vendu sous la dénomination commerciale Luperox^{®} 610 par Arkema, l'alpha-cumyl peroxyneoheptanoate, vendu sous la dénomination Luperox^{®} 188, le tert-amyl peroxynéodécanoate vendu sous la dénomination commerciale Luperox ^{®} 546 et le tert-butyl peroxynéodécanoate vendu sous la dénomination Luperox^{®} 10 par Arkema, et leurs mélanges.

De préférence, le peroxyde organique de formule (II) est choisi dans le groupe constitué par le 3-hydroxy-1,1 diméthylbutyl peroxyneodécanoate, vendu sous la dénomination Luperox^{®} 610 par Arkema, le tert-butyl peroxynéodécanoate vendu sous la dénomination Luperox^{®} 10 par Arkema et leurs mélanges.

Avantageusement, le peroxyde organique de formule (II) est le 3-hydroxy-1,1 diméthylbutyl peroxyneodécanoate vendu sous la dénomination commerciale Luperox^{®} 610 par Arkema.

Le ou les peroxydes organiques de formule (I) et le ou les peroxydes organiques de formule (II) sont préférentiellement présents dans une concentration allant de 40 à 70% en poids par rapport au poids total de la composition, de préférence allant de 40 à 65% en poids par rapport au poids total de la composition, plus préférentiellement présents dans une concentration allant de 40 à 60% en poids par rapport au poids total de la composition. En d'autres termes, la concentration du ou des peroxydes organiques de formule (I) plus la concentration du ou des peroxydes organiques de formule (II) représentent préférentiellement une concentration allant de 40 à 70% en poids par rapport au poids total de la composition, de préférence allant de 40 à 65% en poids par rapport au poids total de la composition, plus préférentiellement allant de 40 à 60% en poids par rapport au poids total de la composition.

De préférence, la concentration totale en peroxydes organiques dans la composition va de 40 à 70% en poids par rapport au poids total de la composition, de préférence de 40 à 65% en poids par rapport au poids total de la composition, plus préférentiellement de 40 à 60% en poids.

De préférence, seuls les peroxydes organiques de formules (I) et (II) sont présents dans la composition.

De préférence, le rapport pondéral peroxyde(s) organique(s) de formule (I) /peroxyde(s) organique(s) de formule (II) varie de 1/99 à 99/1, préférentiellement de 2/98 à 98/2.

Selon un autre mode de réalisation, le rapport pondéral peroxyde(s) organique(s) de formule (I) /peroxyde(s) organique(s) de formule (II) varie de 10/90, en particulier de 20/80, à 50/50.

Selon un autre mode de réalisation, le rapport pondéral peroxyde(s) organique(s) de formule (I) /peroxyde(s) organique(s) de formule (II) varie de 99/1, en particulier de 97/3, en particulier 90/10 et préférentiellement 80/20 à 50/50.

Les peroxydes organiques de formules (I) et (II) ont avantageusement une température de demi-vie à une heure inférieure ou égale à 90°C, de préférence inférieure à 90°C.

De plus, les peroxydes organiques de formules (I) et (II) ont avantageusement une température de stockage inférieure à 0°C.

Les peroxydes organiques de formules (I) et (II) sont avantageusement liquides à la température de stockage, de préférence à une température de stockage inférieure à 0°C, mesurée à la pression atmosphérique.

De préférence, la composition selon l'invention comprend :
- un ou plusieurs peroxydes organiques de formule (I) :

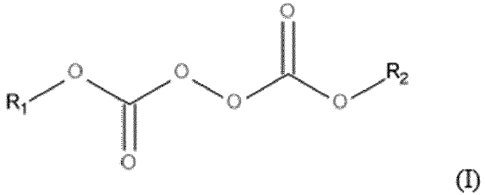

Formule (I), dans laquelle R¹ et R² sont identiques et représentent un groupement alkyle en C₁-C₁₆, en particulier en C₃-C₁₂, encore plus préférentiellement en C₃-C₁₀, linéaire ou ramifié, de préférence ramifié ;
- un ou plusieurs peroxydes organiques de formule (II) :

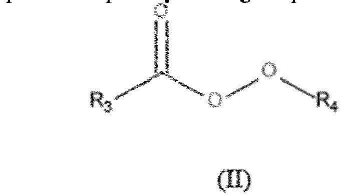

Formule (II) dans laquelle :
- R³ représente un groupement alkyle en C₇-C₂₀, de préférence un groupement alkyle en C₇-C₁₆, en particulier en C₇-C₁₀, linéaire, ramifié ou cyclique, de préférence ramifié, pouvant comprendre, de préférence interrompu par, un ou plusieurs atomes d'oxygène, de préférence un atome d'oxygène ;
- R⁴ représente :
   i) un groupement alkyle en C₇-C₂₀,de préférence un groupement alkyle en C₇-C₁₆, en particulier en C₇-C₁₀, linéaire ou ramifié, de préférence ramifié, pouvant comprendre, de préférence interrompu par, un ou plusieurs atomes d'oxygène, de préférence un atome d'oxygène ;
   ii) un groupement alkyle en C₁-C₇, de préférence en C₂-C₆, linéaire ou ramifié, de préférence ramifié, éventuellement substitué par un ou plusieurs groupements hydroxyle, ou
   iii) un groupement alkyle en C₇-C₁₀ cyclique, en particulier en C₉, cyclique.

Avantageusement, conformément à ce mode de réalisation préféré, dans la formule (I), R¹ et R² sont identiques et représentent un groupement alkyle en C₂-C₈, linéaire ou ramifié, de préférence ramifié.

Avantageusement, conformément à ce mode de réalisation préféré, R³ et R⁴ sont différents.

Encore plus avantageusement, conformément à ce mode de réalisation préféré, dans la formule (II) :
- R³ représente un groupement alkyle en C₇-C₂₀, de préférence un groupement alkyle en C₇-C₁₆, en particulier en C₇-C₁₀, linéaire ou ramifié, de préférence linéaire ;
- R⁴ représente un groupement alkyle en C₁-C₇, de préférence en C₂-C₆, linéaire ou ramifié, de préférence ramifié, éventuellement substitué par un ou plusieurs groupements hydroxyle.

Avantageusement encore, conformément à ce mode de réalisation préféré, dans la formule (II), R⁴ représente un groupement alkyle en C₁-C₇ de préférence en C₂-C₆, linéaire ou ramifié, de préférence ramifié, éventuellement substitué par un ou plusieurs groupements hydroxyle.

Avantageusement encore, conformément à ce mode de réalisation préféré, dans la formule (II), R⁴ représente un groupement alkyle en C₁-C₇, de préférence en C₂-C₆, linéaire ou ramifié, de préférence ramifié, substitué par un ou plusieurs groupements hydroxyle, en particulier un groupement hydroxyle.

Plus avantageusement, la composition selon l'invention comprend le peroxydicarbonate de di(2-éthylhexyl), en particulier vendu sous la dénomination commerciale Luperox ^{®} 223, ou le peroxydicarbonate de di-sec-butyl, en particulier vendu sous la dénomination commerciale Luperox^{®} 225 et des hydroxyperoxyesters de formule (II), de préférence le 3-hydroxy-1,1 diméthylbutyl peroxyneodécanoate, en particulier vendu sous la dénomination commerciale Luperox ^{®} 610.

De préférence, la composition peut comprendre un ou plusieurs agents antigel choisi préférentiellement dans le groupe constitué par les monoalcools, diols et triols.

De préférence, l'agent antigel est choisi dans le groupe constitué par le méthanol, l'éthanol, l'éthylène glycol, l'isopropanol, le n-propanol, le propane-1,2-diol, le propane-1,3-diol, le glycérol, le butan-1-ol, le butan-2-ol, le butan-1,3-diol et le butan-1,4-diol et leurs mélanges, ces mélanges comprenant au moins deux des agents antigel énumérés précédemment, avantageusement un mélange d'éthanol et de propane-1,2-diol.

De préférence, l'agent antigel est choisi dans le groupe constitué par le méthanol, l'éthanol et le propane-1,2-diol et leurs mélanges, en particulier un mélange d'éthanol et de propane-1,2-diol. De manière particulièrement préféré, l'agent antigel est le propane-1,2-diol.

L'agent antigel est de préférence présent dans la composition selon l'invention dans une teneur inférieure à 40% en poids, de préférence inférieure à 25% en poids, de préférence inférieure à 22% en poids par rapport au poids total de la composition. De telles teneurs en antigel permettent à la phase aqueuse de rester sous forme liquide jusqu'à des températures inférieures à -20°C, de préférence jusqu'à des températures inférieures à -25°C.

De préférence, la composition selon l'invention contient moins de 10% en poids d'éthanol par rapport au poids total de la composition.

De préférence, la composition selon l'invention est exempte d'éthanol.

De préférence, la composition selon l'invention contient moins de 10% en poids de méthanol par rapport au poids total de la composition.

De préférence, la composition selon l'invention est exempte de méthanol.

De préférence, la composition selon l'invention comprend moins de 10% en poids d'éthanol ou de méthanol par rapport au total de la composition. Si la composition selon l'invention comprend à la fois de l'éthanol et du méthanol, leur teneur totale en poids est inférieure à 10% par rapport au poids total de la composition.

La composition selon l'invention peut également comprendre un ou plusieurs agents émulsifiants.

De préférence, l'agent émulsifiant est un tensioactif non ionique.

De préférence, l'agent émulsifiant est un tensioactif non ionique oxyalkylénés ou non, choisi dans le groupe constitué par les alcools gras, les acides gras, les sorbitans, les huiles végétales ou animales (hydrogénées ou non) ; ou leurs mélanges.

Les motifs oxyalkylénés sont plus particulièrement des motifs oxyéthylénés (i.e. des groupes d'oxyde d'éthylène), oxypropylénés (i.e. des groupes d'oxyde de propylène), ou leur combinaison, de préférence oxyéthylénés ou une combinaison de motifs oxyéthylénés et de motifs oxypropylénés.

Autrement dit, le tensioactif non ionique est de préférence choisi dans le groupe constitué par les alcools gras ayant des motifs oxyéthylénés et éventuellement des motifs oxypropylénés, les acides gras ayant des motifs oxyéthylénés et éventuellement des motifs oxypropylénés et oxypropylénés, les huiles végétales ou animales, éventuellement hydrogénées, ayant des motifs oxyéthylénés et éventuellement des motifs oxypropylénés.

Les motifs oxyéthylénés (i.e. groupes d'oxyde d'éthylène) et oxypropylénés (i.e. groupes d'oxyde de propylène) peuvent être répartis de manière statistique ou en bloc.

Le nombre de moles d'oxyde d'éthylène et/ou de propylène varie de préférence de 1 à 250, plus particulièrement de 2 à 100, mieux de 2 à 50 et plus particulièrement de 2 à 40.

De préférence, le nombre de moles d'oxyde d'éthylène varie de 2 à 40.

Par « alcool gras », on entend au sens de la présente invention un alcool comportant au moins 8 atomes de carbone, de préférence un alcool en C₈-C₄₀, préférentiellement en C₈-C₂₀.

Parmi les alcools gras, on peut citer notamment le 2-octyl dodécanol, le décanol, l'alcool laurique, l'alcool oléocétylique, l'isodécanol, oxo isotridécanol, l'alcool cétostéarique, l'alcool caprylique, l'alcool myristique, l'alcool hexadécanoïque ou palmitique, l'alcool stéarique, l'alcool eicosanoïque ou arachidique, l'alcool béhénique, l'alcool oléique, l'alcool eicosenoïque ou gadolique, l'alcool docosenoïque, l'acool ricinoléïque, l'alcool linoléique, l'alcool linolénique.

De préférence, le tensioactif non ionique est choisi dans le groupe constitué par les alcools gras oxyalkylénés choisi de préférence parmi l'octyl dodécanol, le décanol, l'alcool laurique, l'alcool oléocétylique, l'isodécanol, l'alcool caprique, l'alcool oxo isotridécanol, l'alcool cétostéarique, l'alcool éléostéarique, l'alcool caprylique, l'alcool myristique, l'alcool hexadécanoïque ou palmitique, l'alcool stéarique, l'alcool eicosanoïque ou arachidique, l'alcool béhénique, l'alcool oléique, l'alcool eicosenoïque ou gadolique, l'alcool docosenoïque, l'acool ricinoléïque, l'alcool linoléique, l'alcool linolénique oxyalkylénés, de préférence oxyéthylénés et/ou oxypropylénés, et plus préférentiellement oxyéthylénés et éventuellement oxypropylénés.

De préférence, les alcools gras oxyalkylénés sont choisis dans le groupe constitué par l'alcool linoléique oxyéthyléné, l'alcool linolénique oxyéthyléné, l'alcool éléostéarique oxyéthyléné et leurs mélanges.

Les alcools gras précédemment cités peuvent éventuellement être minoritairement oxypropylénés.

De préférence, les huiles végétales/animales (hydrogénées ou non) oxyalkylénées sont en particulier des dérivés de mono, di et triglycérides éthoxylés et comprennent un mélange complexe de glycérol éthoxylé relié ou non à une ou des chaines d'acides gras (eux-mêmes éthoxylés ou non), d'acides gras éthoxylés sur la fonction acide et/ou sur la fonction hydroxyle portée par la chaine d'acide gras, ainsi que des proportions variables d'acides gras, de glycérol et de mono, di ou triglycérides d'acides gras.

Par « acide gras », on entend au sens de la présente un acide ou un mélange d'acides comprenant au moins 6 atomes de carbone, de préférence de 6 à 60 atomes de carbone, mieux de 6 à 20 atomes de carbone.

Les huiles végétales/animales (hydrogénées ou non) oxyalkylénées sont de préférence choisies dans le groupe constitué par les huiles végétales, éventuellement hydrogénées, oxyéthylénées (ou éthoxylées).

Les huiles végétales, éventuellement hydrogénées, oxyéthylénées sont de préférence choisies dans le groupe constitué par l'huile de ricin éthoxylée et l'huile de ricin hydrogénée éthoxylée comprenant de 20 à 40 moles d'oxyde d'éthylène par mole d'acide ricinoléïque. On peut également citer des huiles éthoxylées dérivées des huiles de coprah, de palme, de palmiste, d'olive, d'arachide, de colza, de soja, de tournesol, de noix, de noisette, de coco, d'oeuillette, de safflor, de lin, de périlla, d'oïtica, et de bois de Chine.

On peut également citer des graisses éthoxylées à base d'huiles de suif, de tall brut ou raffiné, de baleine, d'hareng, et de sardine. L'ensemble de ces dérivés glycérides éthoxylés sont caractérisés en ce qu'ils comportent des mélanges de mono, di ou tri glycérides éthoxylés ainsi que des dérivés éthoxylés des acides gras et du glycérol correspondant. Ces acides gras sont notamment issus des acides gras saturés ou insaturés des acides caproïque, caprylique, caprique, laurique, myristique, palmitique, stéarique, arachique, béhénique, myristoléïque, palmitoléïque, oléïque, ricinoléïque, érucique, linoléïque, linolénique, oléostéarique, licanique, gadoléïque, ernéïque. Certains acides gras insaturés sont ou non hydrogénés comme dans le cas de l'huile de ricin éthoxylée ou le groupe ricinoléïque a ou non été en partie ou totalement hydrogéné.

De préférence, le tensioactif non ionique est choisi dans le groupe constitué par les huiles végétales ou animales (hydrogénées ou non) oxyalkylénées.

Préférentiellement, le tensioactif non ionique est choisi dans le groupe constitué par les huiles végétales, éventuellement hydrogénées, oxyéthylénées et éventuellement oxypropylénés.

Préférentiellement encore, le tensioactif non ionique est choisi dans le groupe constitué par les huiles végétales éthoxylées, éventuellement hydrogénées, comportant de 20 à 40 moles d'oxyde d'éthylène, en particulier l'huile de ricin éthoxylée et l'huile de ricin hydrogénée éthoxylée de 20 à 40 moles d'oxyde d'éthylène.

Encore plus préférentiellement encore, le tensioactif non ionique est l'huile de ricin éthoxylée comportant de 20 à 40 moles d'oxyde d'éthylène.

L'agent émulsifiant peut être présent dans la composition selon l'invention dans une teneur allant de 0,1 à 10% en poids, de préférence dans une teneur allant de 0,5 à 5% en poids, par rapport au poids total de la composition.

De préférence, l'agent émulsifiant selon l'invention ne comprend pas de polyvinyle acétate partiellement hydrolysé, encore préférentiellement ne comprend pas de polyvinyle acétate, encore préférentiellement ne comprend pas polyvinyle acétate ni d'ester de cellulose. Ceci permet notamment de réduire le temps de préparation au niveau industriel, car le polyvinyle acétate qui est sous forme solide nécessite une étape de dissolution préalable, et de minimiser les risques liés à la manipulation de poudres.

La composition selon l'invention peut également comprendre un ou plusieurs additifs destinés à procurer à la composition finale des propriétés/caractéristiques particulières. Ces additifs seront idéalement présents pour la polymérisation ou copolymérisation finale.

L'additif peut être choisi dans le groupe constitué par les agents anti-moussants, les agents de transferts de chaîne, les agents allongeurs de chaîne, les agents régulateurs de pH, les plastifiants et leurs mélanges.

De préférence, la composition selon l'invention comprend un ou plusieurs plastifiants, de préférence choisis dans le groupe constitué par les phtalates, adipates, benzoates et les dérivés hydrogénés de ces molécules dont en particulier le diisononylcyclohexane et le di-isononyl cyclohexane dicarboxylate et leurs mélanges. De préférence, la composition selon l'invention comprend :
- un ou plusieurs peroxydes organiques de formule (I) :

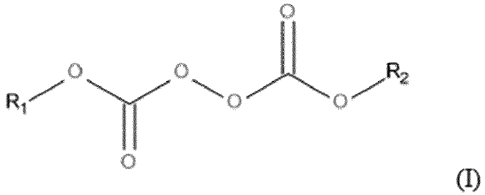

Formule (I), dans laquelle R¹ et R² sont identiques et représentent un groupement alkyle en C₁-C₁₆, en particulier en C₃-C₁₂, encore plus préférentiellement en C₃-C₁₀, linéaire ou ramifié, de préférence ramifié ;
- un ou plusieurs peroxydes organiques de formule (II) :

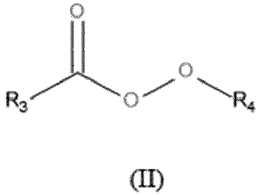

Formule (II) dans laquelle :
- R³ représente un groupement alkyle en C₇-C₂₀, de préférence un groupement alkyle en C₇-C₁₆, en particulier en C₇-C₁₀, linéaire, ramifié ou cyclique, de préférence ramifié, pouvant comprendre, de préférence interrompu par, un ou plusieurs atomes d'oxygène, de préférence un atome d'oxygène ;
- R⁴ représente :
   i) un groupement alkyle en C₇-C₂₀,de préférence un groupement alkyle en C₇-C₁₆, en particulier en C₇-C₁₀, linéaire ou ramifié, de préférence ramifié, pouvant comprendre, de préférence interrompu par, un ou plusieurs atomes d'oxygène, de préférence un atome d'oxygène ;
   ii) un groupement alkyle en C₁-C₇, de préférence en C₂-C₆, linéaire ou ramifié, de préférence ramifié, éventuellement substitué par un ou plusieurs groupements hydroxyle ; ou
   iii) un groupement alkyle en C₇-C₁₀ cyclique, en particulier en C₉, cyclique.
- un ou plusieurs agent émulsifiants, de préférence choisis dans le groupe constitué par les alcools gras alcoxylés, les acides gras alcoxylés et les huiles végétales ou animales (hydrogénées ou non) alcoxylées ou leurs mélanges, de préférence huiles végétales, éventuellement hydrogénées, alcoxylées,
- éventuellement un ou plusieurs agents antigels, de préférence choisis dans le groupe constitué par l'éthanol, le méthanol et le propane-1,2-diol.

De préférence, la composition selon l'invention comprend :
- un ou plusieurs peroxydes organiques de formule (I) : 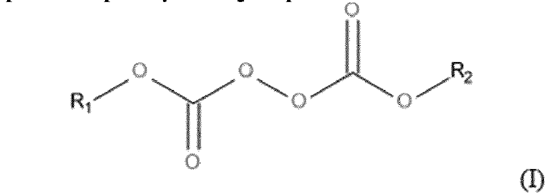
- Formule (I), dans laquelle R¹ et R² sont identiques et représentent un groupement alkyle en C₁-C₁₆, en particulier en C₃-C₁₂, encore plus préférentiellement en C₃-C₁₀, linéaire ou ramifié, de préférence ramifié ;
- un ou plusieurs peroxydes organiques de formule (II),

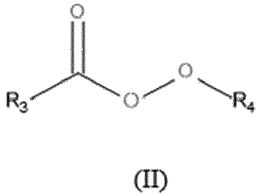

Formule (II) dans laquelle :
- R³ représente un groupement alkyle en C₇-C₂₀, de préférence un groupement alkyle en C₇-C₁₆, en particulier en C₇-C₁₀, linéaire ou ramifié, de préférence ramifié ;
- R⁴ représente un groupement alkyle en C₁-C₇, de préférence en C₂-C₆, linéaire ou ramifié, de préférence ramifié, éventuellement substitué par un ou plusieurs groupements hydroxyle ;
- un ou plusieurs agent émulsifiants choisis dans le groupe constitué par les tensioactifs non ioniques, de préférence choisis dans le groupe constitué par les alcools gras alcoxylés, les acides gras alcoxylés et les huiles végétales ou animales (hydrogénées ou non) alcoxylées ou leurs mélanges,
- optionnellement un ou plusieurs agents antigels de préférence choisis dans le groupe constitué par l'éthanol, le méthanol et le propane-1,2-diol.

### Préparation de la composition

De préférence, la composition selon l'invention peut être préparée selon un procédé comprenant successivement :
(i) le mélange :
   (a) d'au moins un peroxyde organique de formule (I) : 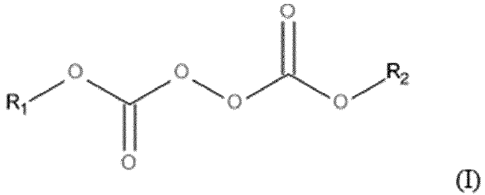 Formule (I) dans laquelle R¹ et R², identiques ou différents, représentent un groupement alkyle en C₁-C₂₀, linéaire, ramifié ou cyclique, pouvant comprendre un ou plusieurs hétéroatomes, de préférence un ou plusieurs atomes d'oxygène ; et
   (b) d'au moins un peroxyde organique de formule (II) : 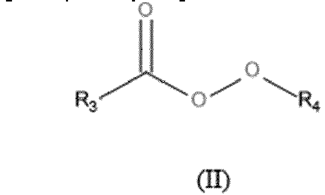 Formule (II) dans laquelle R³ et R⁴, identiques ou différents, représentent un groupement alkyle en C₁-C₂₀, linéaire, ramifié ou cyclique, pouvant comprendre un ou plusieurs hétéroatomes, de préférence un ou plusieurs atomes d'oxygène, et/ou éventuellement substitué par un ou plusieurs groupements hydroxyle ;
(ii) Optionnellement, la mise en émulsification du mélange.

Ainsi l'invention concerne aussi un procédé de préparation de la composition selon l'invention comprenant successivement (i) le mélange (a) d'au moins un peroxyde organique de formule (I), tel que défini précédemment, et (b) d'au moins un peroxyde organique de formule (II), tel que défini précédemment, (ii) la mise en émulsification du mélange.

Autrement dit, le procédé de préparation de la composition peut comprendre successivement (i) au moins une étape de mélange (a) d'au moins un peroxyde organique de formule (I), telle que définie précédemment, et (b) d'au moins un peroxyde organique de formule (II), telle que définie précédemment, et (ii) optionnellement au moins une étape d'émulsification du mélange.

De préférence, le procédé selon l'invention comprend successivement :
- l'ajout d'au moins un agent émulsifiant, tel que défini précédemment, dans l'eau,
- le mélange d'au moins un peroxyde organique de formule (I), telle que définie ci-avant, et d'au moins un peroxyde de formule (II), telle que définie ci-avant, dans phase aqueuse,
- la mise en émulsion dudit mélange.

La composition selon l'invention peut être préparée en dispersant au moins l'agent émulsifiant, et éventuellement un ou plusieurs agents antigels ainsi qu'un ou plusieurs additifs, dans de l'eau pour obtenir une phase aqueuse homogène puis en ajoutant un ou plusieurs peroxydes organiques de formule (I) et (II) à ladite phase aqueuse, le tout étant ensuite émulsionné au cours d'une étape d'émulsion à une température inférieure à 5°C (Celsius), de manière à limiter la dégradation prématurée du peroxyde et de préférence inférieure à -5°Celsius.

Les étapes mentionnées ci-dessus peuvent être exécutées dans l'ordre particulier prescrit ou dans un ordre différent.

La température à laquelle on prépare l'émulsion n'est pas critique mais elle doit être suffisamment réduite pour éviter un taux important de décomposition du peroxyde organique dont le résultat serait une perte du titre. La température choisie dépend du peroxyde organique. Par ailleurs, pour préparer les émulsions aqueuses, on utilise classiquement de l'eau désionisée ou de l'eau distillée. Le procédé de préparation comporte une étape d'émulsion avec un mélangeur à fort taux de cisaillement pour diviser et/ou homogénéiser au mieux le peroxyde dans la phase aqueuse. A titre d'exemple, on pourra citer des agitateurs à pales et à ancre à rotation mécanique, les agitateurs à hélice, c'est-à-dire un ou plusieurs agitateurs montés sur un arbre commun, les agitateurs à turbine, c'est-à-dire ceux comportant des chicanes fixes sur la cuve mélangeuse ou en position adjacente aux organes agitateurs. On peut également utiliser des broyeurs colloïdaux et des homogénéisateurs.

Selon une caractéristique de réalisation, le procédé selon l'invention est caractérisé en ce que l'on utilise un mélangeur ultrasonique ou un mélangeur rotor-stator. Suite à la préparation de l'émulsion, les étapes de pompage et d'introduction des émulsions dans un réacteur de polymérisation doivent être effectuées le plus rapidement possible. C'est ainsi que les émulsions de peroxyde doivent avoir une viscosité faible. Ainsi, les émulsions de peroxydes organiques selon l'invention présentent une gamme de viscosité dynamique à -10°C, 100 s⁻¹, inférieure à 850 mPa.s, de préférence inférieure à 700 mPa.s, préférentiellement inférieure à 500 mPa.s juste après production, (les mesures de viscosité sont mesurées par exemples selon la norme DIN 53019, bien connue de l'homme du métier, avec un appareil de type Viscotester Haake VT550, à -10°C et pour une vitesse de cisaillement de 100 s⁻¹).

Leur coulabilité ou temps d'écoulement mesuré par une technique de coupe consistométrique est inférieure à 200 secondes, préférentiellement inférieure à 100 secondes (DIN 53211, diamètre de la coupe de viscosité 4 mm, Température de 5°C). Les étapes ultérieures de polymérisation ou de copolymérisation ne sont, dans le cadre de la présente invention, pas différentes de celle de l'art antérieur.

### Utilisation

La présente invention concerne aussi l'utilisation d'une composition d'émulsion aqueuse comprenant le mélange de peroxydes organiques, tels que définis ci-avant, pour la polymérisation ou la copolymérisation d'un ou plusieurs monomères éthyléniquement insaturés, en particulier d'un ou plusieurs monomères vinyliques, de préférence halogénés, et plus préférentiellement de chlorure de vinyle.

A titre de monomères éthyléniquement insaturés, on peut citer les acrylates, les esters vinyliques, les monomères halogénure de vinyle, les éthers vinyliques, le butadiène, les composés vinyliques aromatiques tels que le styrène.

De préférence, les monomères éthyléniquement insaturés sont choisis dans le groupe constitué par les monomères halogénure de vinyle (i.e. monomères vinyliques halogénés), et plus préférentiellement le chlorure de vinyle.

### Polymère

Un autre objet de la présente se rapporte au polymère vinylique halogéné obtenu par polymérisation d'au moins un monomère éthyléniquement insaturé, tel que défini précédemment, en présence de la composition selon l'invention telle que définie ci-avant.

De préférence, l'invention a trait au poly(chlorure de vinyle) obtenu par polymérisation du chlorure de vinyle en présence de la composition selon l'invention, en particulier du mélange de peroxydes organiques, tels que définis ci-avant.

En particulier, la polymérisation du monomère chlorure de vinyle se produit en suspension à une température d'initiation allant de 45°C à 70°C.

Les exemples suivants servent à illustrer l'invention sans toutefois présenter un caractère limitatif.

### EXEMPLES

### Exemple 1

Les compositions A1, A2, A3 et B1 suivantes sont préparées selon le mode opératoire indiqué ci-après.

Un agent émulsifiant et un agent antigel sont ajoutés dans de l'eau.

La phase aqueuse contenant l'agent émulsifiant, à savoir le tensioactif non ionique, l'agent antigel et l'eau est agitée entre 500 et 1000 tours par minute (tpm) et maintenue à -5°C (Celsius) de manière à obtenir une phase aqueuse homogène.

Les peroxydes organiques sont ajoutés progressivement dans le réacteur contenant ce mélange eau/tensioactif/antigel. L'agitation est maintenue pendant trois minutes à 2000 tpm. L'ensemble est ensuite fortement agité à l'aide d'un appareil à ultrasons « Ultraturrax type S-25N 18G» pendant deux minutes à 9500 tpm, puis sous agitation à l'aide d'une pâle à 1000 tpm pendant une minute. Chaque émulsion se fait sur 200 grammes au total.

### Tests réalisés :

Les mesures de viscosité dynamique sont réalisées à l'aide d'un viscosimètre de type « Viscotester Haake VT550 ». Le dispositif de mesure est le « SV-DIN 53019 », se référant à la norme DIN 53019. La mesure s'effectue à l'aide de cylindres coaxiaux qui créent le cisaillement. Entre 5 à 10 ml (millilitre) d'émulsion est introduite dans la chambre de mesure maintenue à -10°C. Les valeurs données dans les exemples ci-dessous correspondant à une vitesse de cisaillement de 100 s⁻¹ et sont exprimées en mPa.s. La précision de la mesure est de ±10 % de la valeur indiquée.

Les mesures de temps d'écoulement sont réalisées à l'aide de coupes consistométriques selon la norme DIN 53211 (diamètre de la coupe de viscosité : 4 mm), bien connue de l'homme du métier. La mesure se fait sur 100 g d'émulsion après conditionnement à +5 °C. Les mesures de temps d'écoulement sont exprimées en secondes et la précision est de ±10 % de la valeur indiquée.

La taille moyenne des gouttelettes ainsi que la taille maximale de gouttelettes sont déterminées par des moyens conventionnels en utilisant la technique de diffraction de la lumière pendant une période allant de 1 à 6 mois à une température de -25°C/- 20°C.

Les mesures sont faites en utilisant un dispositif de Malvern Master Sizer 2000^{®} à température ambiante. La taille moyenne des gouttelettes ainsi que la taille maximale de gouttelettes sont données avec une précision de ± 0,5 µm (micromètre).

### Compositions :

Les quantités des ingrédients ci-dessous sont indiquées en pourcentage en poids par rapport au poids total de la composition dans le tableau 1 ci-après :

**[Tableau 1]**

| | A1 (comp) | A2 (comp) | A3 (comp) | B1 (inv) |
|---|---|---|---|---|
| Peroxydicarbonate de di-sec-butyl (Luperox^{®} 225) | 50% | 50% | 50% | 50% |
| 3-hydroxy-1,1-diméthylbutyl peroxyneodécanoate (Luperox^{®} 610) | - | - | - | 3% |
| Huile de ricin éthoxylée (310E) (Surfaline ^{®} R31L) | 1,44% | - | - | - |
| Huile de ricin éthoxylée (20OE) (Surfaline ^{®} R20) | - | 1,50% | 1,50% | 1,50% |
| Propane-1,2-diol | 21,4% | 21,4% | 5,4% | 21,4% |
| Ethanol | - | - | 10% | |
| Eau | Qsp 100 | Qsp 100 | Qsp 100 | Qsp 100 |

### Résultats :

### Au moment de la production des compositions

Les résultats de taille moyenne de gouttelettes, taille maximale de gouttelettes et de coupe de viscosité au moment de la production des compositions A1, A2, A3 et B1 sont regroupés dans le tableau 2 ci-après :

**[Tableau 2]**

| | A1 (comp) | A2 (comp) | A3 (comp) | B1 (inv) |
|---|---|---|---|---|
| Taille moyenne de gouttelettes (µm) | 2,1 | 2,03 | 2,02 | 1,4 |
| Taille maximale de gouttelettes (µm) | 5 | 5,8 | 5 | 3,3 |
| Coupe de viscosité à T = +5°C (sec) | 22 | 24 | 16 | 27 |

Les résultats montrent que la composition selon l'invention (composition B) présente une taille moyenne de gouttelettes (µm) ainsi qu'une taille maximale de gouttelettes inférieures aux compositions comparatives A1, A2 et A3 ne comprenant pas un tel mélange de peroxydes organiques.

### Stabilité des compositions testées

Les tailles moyenne et maximale de gouttelettes de la composition B déterminées à 6 mois des compositions testées et stockées à -20°C dans un congélateur sont de 2,2 et 7,6 µm respectivement.

### Exemple 2 :

La composition A4, correspondant à une émulsion aqueuse de peroxydicarbonate de di(2-éthylhexyl) (Luperox^{®} 223), et la composition A5 correspondant à une émulsion aqueuse de 3-hydroxy-1,1-diméthylbutyl peroxyneodécanoate (Luperox^{®} 610), sont préparées selon un mode opératoire similaire à celui décrit dans l'exemple 1.

La composition B2 a été préparée en mélangeant 67% en poids de la composition A4 et 33% en poids de la composition A5 entre elles.

La composition B3 a été préparée en ajoutant le peroxydicarbonate de di(2-éthylhexyl) et le 3-hydroxy-1,1-diméthylbutyl peroxyneodécanoate dans une phase aqueuse un rapport pondéral de 67/33 conformément au mode opératoire décrit dans l'exemple 1.

Les compositions A4, A5, B2 et B3 sont décrites dans les tableaux 3 à 5 ci-après.

### Compositions :

Les quantités des ingrédients ci-dessous sont indiquées en pourcentage en poids par rapport au poids total des compositions A4 et A5 dans le tableau 3 ci-après :

**[Tableau 3]**

| | A4 (comp) | A5 (comp) |
|---|---|---|
| Peroxydicarbonate de di(2-éthylhexyl) (Luperox^{®} 223) | 60% | - |
| 3-hydroxy-1,1-diméthylbutyl peroxyneodécanoate (Luperox^{®} 610) | - | 50% |
| Alcool polyvinylique (Alcotex 552 P) | 1.2% | 1.6% |
| Propane-1,2-diol | 3.2% | 6.7% |
| Méthanol | 11% | 9.8% |
| Eau | Qsp 100 | Qsp 100 |

Les quantités des ingrédients ci-dessous sont indiquées en pourcentage en poids par rapport au poids total de la composition B2 dans le tableau 4 ci-après :

Les quantités des ingrédients ci-dessous sont indiquées en pourcentage en poids par rapport au poids total de la composition B2 dans le tableau 4 ci-après :

**[Tableau 4]**

| | B2 (inv) |
|---|---|
| Peroxydicarbonate de di(2-éthylhexyl) (Luperox^{®} 223) | 40.1% |
| 3-hydroxy-1,1-diméthylbutyl peroxyneodécanoate (Luperox^{®} 610) | 18.4% |
| Alcool polyvinylique (Alcotex 552 P) | 1.2% |
| Propane-1,2-diol | 3.2% |
| Méthanol | 11.0% |
| Eau | Qsp 100 |

### Résultats :

### Stabilité des compositions testées

Les résultats de taille moyenne de gouttelettes et taille maximale de gouttelettes déterminés au moment de la fabrication des compositions testées et sur une période de temps allant de 1 à 6 mois sont regroupés dans le tableau 5 ci-après :

**[Tableau 5]**

| | | A4 (comp) | A5 (comp) | B2 (inv) |
|---|---|---|---|---|
| T₀ | Taille moyenne de gouttelettes (µm) | 3.5 | 2.1 | 2.7 |
| | Taille maximale de gouttelettes (µm) | 10 | 7.6 | 8.7 |
| T+1 mois | Taille moyenne de gouttelettes (µm) | 3.9 | 3.8 | 3.3 |
| | Taille maximale de gouttelettes (µm) | 11.5 | 11.5 | 10 |
| T+2 mois | Taille moyenne de gouttelettes (µm) | 4.1 | 5.3 | 3.4 |
| | Taille maximale de gouttelettes (µm) | 13.2 | 20 | 10 |
| T+3 mois | Taille moyenne de gouttelettes (µm) | 4.2 | 6 | 3.5 |
| | Taille maximale de gouttelettes (µm) | 13.2 | 22.9 | 10 |
| T+4 mois | Taille moyenne de gouttelettes (µm) | 4.3 | 6.6 | 3.7 |
| | Taille maximale de gouttelettes (µm) | 13.2 | 22.9 | 10 |
| T+6 mois | Taille moyenne de gouttelettes (µm) | 4.5 | 7.1 | 4 |
| | Taille maximale de gouttelettes (µm) | 13.2 | 26.3 | 10 |

Les résultats montrent que les compositions selon l'invention (composition B2) présentent une taille moyenne de gouttelettes (µm) ainsi qu'une taille maximale de gouttelettes inférieures aux compositions comparatives A4 et A5 ne comprenant pas un tel mélange de peroxydes organiques.

### Exemple 3 :

La composition A6, correspondant à une émulsion aqueuse de peroxydicarbonate de di(2-éthylhexyl) (Luperox^{®} 223), et la composition A7 correspondant à une émulsion aqueuse de 3-hydroxy-1,1-diméthylbutyl peroxyneodécanoate (Luperox^{®} 610), sont préparées selon un mode opératoire similaire à celui décrit dans l'exemple 1.

La composition B3 a été préparée en mélangeant 73% en poids de la composition A6 et 27% en poids de la composition A7 entre elles à fin d'obtenir un rapport en poids de 80/20.

La composition B4 a été préparée en mélangeant 65% en poids de la composition A6 et 35% en poids de la composition A7 entre elles à fin d'obtenir un rapport en poids de 80/20.

La composition B5 a été préparée en mélangeant le peroxydicarbonate de di(2-éthylhexyl) et le 3-hydroxy-1,1-diméthylbutyl peroxyneodécanoate ajouté dans une phase aqueuse dans un rapport pondéral 80/20 et ce conformément au mode opératoire décrit dans l'exemple 1.

La composition B6 a été préparée en mélangeant le peroxydicarbonate de di(2-éthylhexyl) et le 3-hydroxy-1,1-diméthylbutyl peroxyneodécanoate ajouté dans une phase aqueuse dans un rapport pondéral 70/30 et ce conformément au mode opératoire décrit dans l'exemple 1.

Les compositions A6, A7, B3, B4, B5 et B6 sont décrites dans les tableaux 6 à 8 ci-après.

### Compositions :

Les quantités des ingrédients ci-dessous sont indiquées en pourcentage en poids par rapport au poids total des compositions A6 et A7 dans le tableau 6 ci-après :

**[Tableau 6]**

| | A6 (comp) | A7 (comp) |
|---|---|---|
| Peroxydicarbonate de di(2-éthylhexyl) (Luperox^{®} 223) | 60% | - |
| 3-hydroxy-1,1-diméthylbutyl peroxyneodécanoate (Luperox^{®} 610) | - | 50% |
| Huile ricin éthoxylée Surfaline R20 | 1.2% | 1.2% |
| Ethanol | 9% | 9% |
| Propane-1,2-diol | 6% | 7.5% |
| Eau | Qsp 100 | Qsp 100 |

Les quantités des ingrédients ci-dessous sont indiquées en pourcentage en poids par rapport au poids total de la composition B3 dans le tableau 7 ci-après :

**[Tableau 7]**

| | B3 (inv) |
|---|---|
| Peroxydicarbonate de di(2-éthylhexyl) (Luperox^{®} 223) | 44% |
| 3-hydroxy-1,1-diméthylbutyl peroxyneodécanoate (Luperox^{®} 610) | 11% |
| Huile ricin éthoxylée Surfaline R20 | 1.2% |
| Ethanol | 9% |
| Propane-1,2-diol | 7.5% |
| Eau | Qsp 100 |

Les quantités des ingrédients ci-dessous sont indiquées en pourcentage en poids par rapport au poids total de la composition B4 dans le tableau 8 ci-après :

**[Tableau 8]**

| | B4 (inv) |
|---|---|
| Peroxydicarbonate de di(2-éthylhexyl) (Luperox^{®} 223) | 39% |
| 3-hydroxy-1,1-diméthylbutyl peroxyneodécanoate (Luperox^{®} 610) | 17% |
| Huile ricin éthoxylée Surfaline R20 | 1.2% |
| Ethanol | 9% |
| Propane-1,2-diol | 7.5% |
| Eau | Qsp 100 |

Les quantités des ingrédients ci-dessous sont indiquées en pourcentage en poids par rapport au poids total de la composition B5 dans le tableau 9 ci-après :

**[Tableau 9]**

| | B5 (inv) |
|---|---|
| Peroxydicarbonate de di(2-éthylhexyl) (Luperox^{®} 223) | 46% |
| 3-hydroxy-1,1-diméthylbutyl peroxyneodécanoate (Luperox^{®} 610) | 12% |
| Huile ricin éthoxylée Surfaline R20 | 1.2% |
| Ethanol | 9% |
| Propane-1,2-diol | 7.5% |
| Eau | Qsp 100 |

Les quantités des ingrédients ci-dessous sont indiquées en pourcentage en poids par rapport au poids total de la composition B6 dans le tableau 10 ci-après :

**[Tableau 10]**

| | B6 (inv) |
|---|---|
| Peroxydicarbonate de di(2-éthylhexyl) (Luperox^{®} 223) | 40% |
| 3 -hydroxy-1,1 -diméthylbutyl peroxyneodécanoate (Luperox^{®} 610) | 17% |
| Huile ricin éthoxylée Surfaline R20 | 1.2% |
| Ethanol | 9% |
| Propane-1,2-diol | 7.5% |
| Eau | Qsp 100 |

### Résultats :

### Stabilité des compositions testées

Les résultats de taille moyenne de gouttelettes et taille maximale de gouttelettes déterminés au moment de la fabrication des compositions testées et sur une période de temps allant de 1 à 6 mois sont regroupés dans le tableau 11 ci-après

**[Tableau 11]**

| | | A6 (comp) | A7 (comp) | B3 (inv) | B4 (inv) | B5 (inv) | B6 (inv) |
|---|---|---|---|---|---|---|---|
| T+1 mois | Taille moyenne de gouttelettes (µm) | 2.2 | 7.3 | 1.7 | 1.7 | 1 | 12 |
| | Taille maximale de gouttelettes (µm) | 6.6 | 30.2 | 4.4 | 5 | 2.9 | 3.8 |
| T+6 mois | Taille moyenne de gouttelettes (µm) | 2.6 | 12.8 | 1.8 | 2 | 1.5 | 1.8 |
| | Taille maximale de gouttelettes (µm) | 7.6 | 120.2 | 5 | 5.8 | 5 | 5 |

Les résultats montrent que les compositions selon l'invention (compositions B3 à B6) présentent une taille moyenne de gouttelettes (µm) ainsi qu'une taille maximale de gouttelettes inférieures aux compositions comparatives A6 et A7 qui ne comprennent pas un tel mélange de peroxydes organiques.

## Revendications

1. Composition d'émulsion aqueuse comprenant :
- un ou plusieurs peroxydes organiques de formule (I) : 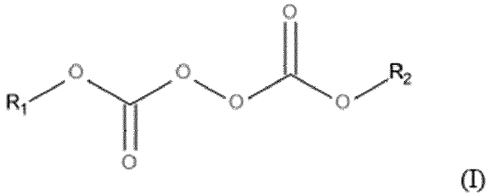 Formule (I) dans laquelle R¹ et R², identiques ou différents, représentent un groupement alkyle en C₁-C₂₀, linéaire, ramifié ou cyclique, pouvant comprendre, de préférence interrompu par, un ou plusieurs hétéroatomes de préférence un ou plusieurs atomes d'oxygène ;
- un ou plusieurs peroxydes organiques de formule (II) : 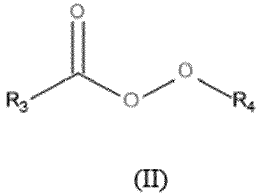
Formule (II) dans laquelle R³ et R⁴, identiques ou différents, représentent un groupement alkyle en C₁-C₂₀ linéaire, ramifié ou cyclique, pouvant comprendre, de préférence interrompu par, un ou plusieurs hétéroatomes, de préférence un ou plusieurs atomes d'oxygène, et/ou éventuellement substitué par un ou plusieurs groupements hydroxyle
le ou les peroxydes organiques de formule (I) et le ou les peroxydes organiques de formule (II) étant présents dans une concentration allant de 40 à 70% en poids par rapport au poids total de la composition, de préférence allant de 40 à 65% en poids par rapport au poids total de la composition, plus préférentiellement allant de 40 à 60% en poids par rapport au poids total de la composition.

2. Composition selon la revendication 1, **caractérisée en ce que** R¹ et R², identiques ou différents, représentent un groupement alkyle en C₁-C₁₆, plus préférentiellement en C₃-C₁₂, en particulier en C₃-C₁₀, linéaire ou ramifié, pouvant comprendre un ou plusieurs hétéroatomes, de préférence un ou plusieurs atomes d'oxygène.

3. Composition selon la revendication 1 ou 2, **caractérisée en ce que** R¹ et R² sont identiques et représentent un groupement alkyle en C₁-C₁₆, plus préférentiellement en C₃-C₁₂, en particulier en C₃-C₁₀, linéaire ou ramifié, de préférence ramifié.

4. Composition selon l'une quelconque des revendications 1 à 3, **caractérisée en ce que** les peroxydes de formule (I) sont choisis dans le groupe constitué par le peroxydicarbonate de di(2-éthylhexyl), le peroxydicarbonate de di-sec-butyl, le peroxydicarbonate de bis(1- méthylheptyl), di-n-propylperoxydicarbonate, di(3-methoxybutyl)peroxydicarbonate, le peroxycarbonate de diéthyle et leurs mélanges, de préférence le peroxydicarbonate de di(2-éthylhexyl) et le peroxydicarbonate de di-sec-butyl.

5. Composition selon l'une quelconque des revendications précédentes, **caractérisée en ce que** :
- R³ représente un groupement alkyle en C₇-C₂₀, de préférence un groupement alkyle en C₇-C₁₆, en particulier en C₇-C₁₀, linéaire, ramifié ou cyclique, de préférence ramifié, pouvant comprendre, de préférence interrompu par, un ou plusieurs atomes d'oxygène, de préférence un atome d'oxygène ;
- R₄ représente :
i) un groupement alkyle en C₇-C₂₀, de préférence un groupement alkyle en C₇-C₁₆, en particulier en C₇-C₁₀, linéaire ou ramifié, de préférence ramifié, pouvant comprendre, de préférence interrompu par, un ou plusieurs atomes d'oxygène, de préférence un atome d'oxygène ;
ii) un groupement alkyle en C₁-C₇, de préférence en C₂-C₇, linéaire ou ramifié, de préférence ramifié, éventuellement substitué par un ou plusieurs groupements hydroxyle,
iii) un groupement alkyle en C₇-C₁₀ cyclique, en particulier en C₉, cyclique.

6. Composition selon l'une quelconque des revendications précédentes, **caractérisée en ce que** les peroxydes de formule (II) sont choisis dans le groupe constitué par l'alpha-cumyl peroxyneodécanoate, alpha-cumyl peroxyneoheptanoate, le 2,4,4 triméthylpentyl-2- peroxyneodécanoate, le tert-butyl peroxy n-heptanoate, le tert-butyl peroxynéodécanoate, le alpha-cumyl peroxy n-heptanoate, le ter-amyl peroxy n-heptanoate, le tert-butyl peroxyneoheptanoate, le 2,5-diméthyl-2,5 di (2-éthylhexanoyl peroxy) hexane, le tert-amyl peroxy 2-éthylhexanoate, le tertbutyl peroxy 2-éthylhexanoate, le 1,1,3,3 tétraméthyl butyl-peroxy-2 éthylhexanoate, les hydroxyperoxyesters, le ter-amyl peroxy neodecanoate, 1,1,3,3 tétraméthyl butyl-peroxy neodecanoate, 1,1,3,3 tétraméthyl butyl-peroxy pivalate, le tert-hexyl peroxynéodécanoate, le tert-hexyl peroxypivalate et leurs mélanges.

7. Composition selon l'une quelconque des revendications précédentes, **caractérisée en ce que** les peroxydes formule (II) sont des hydroxyperoxyesters choisis dans groupe constitué par le 4-hydroxy-2-méthylpentylperoxynéodécanoate, le 4-hydroxy-2-méthylpentylperoxynéoheptanoate, le 4-hydroxy-2-méthylpentylperoxy-(2-éthylhexanoate), le 4-hydroxy-2-méthylpentylperoxy-2-phénylbutyrate, le 4-hydroxy-2-méthylpentylperoxy-2-phénoxypropionate, le 4-hydroxy-2-méthylpentylperoxy-(2-butyloctanoate), le 4-hydroxy-2-méthylpentylperoxynéohexanoate, le 4-hydroxy-2-méthylpentylperoxynéotridécanoate, le 4-hydroxy-2-méthylhexylperoxynéohexanoate, le 4-hydroxy-2-méthylhexylperoxynéodécanoate, le 5-hydroxy-1,3,3-triméthylcyclohexylperoxyneodecanoate, le 4-hydroxy-2,6-diméthyl-2,6-di(néohexanoylperoxy)heptane, le 4-hydroxy-2,6-diméthyl-2,6-di(néodecanoylperoxy)heptane, le 3-hydroxy-1,1 diméthylbutylperoxy 2-éthylhexanoate, le 3-hydroxy-1,1 diméthylbutyl peroxyneodécanoate, le 3- hydroxy-1,1 diméthylbutyl peroxyneoheptanoate et leurs mélanges, de préférence le 3-hydroxy-1,1 diméthylbutyl peroxyneodécanoate.

8. Composition selon l'une quelconque des revendications précédentes, **caractérisée en ce que** le rapport pondéral peroxyde(s) organique(s) de formule (I) / peroxyde(s) de formule (II) varie de 99/1, en particulier de 97/3, en particulier 90/10 préférentiellement 80/20 à 50/50.

9. Composition selon l'une quelconque des revendications précédentes, **caractérisée en ce qu'**elle comprend en outre un ou plusieurs agents antigels.

10. Composition selon l'une quelconque des revendications précédentes, **caractérisée en ce qu'**elle comprend de l'éthanol ou du méthanol dans une teneur inférieure à 10% en poids.

11. Composition selon l'une quelconque des revendications précédentes, **caractérisée en ce qu'**elle comprend un ou plusieurs agents émulsifiants.

12. Composition selon l'une quelconque des revendications précédentes, **caractérisée** en qu'elle comprend une taille moyenne de gouttelettes de peroxyde organique inférieure à 10 µm, de préférence inférieure à 5 µm et une taille maximale de gouttelette inférieure à 20 µm, de préférence inférieure à 15 µm.

13. Procédé de préparation d'une composition telle que définie selon l'une quelconque des revendications 1 à 12 **caractérisé en ce qu'**il comprend successivement:
(i) le mélange :
(a) d'au moins un peroxyde organique de formule (I) tel que défini selon l'une quelconque des revendications 1 à 4,
(b) d'au moins un peroxyde organique de formule (II) tel que défini selon l'une quelconque des revendications 1, 5 à 7,
(ii) Optionnellement, la mise en émulsion du mélange.

14. Utilisation de la composition telle que définie selon l'une quelconque des revendications 1 à 12, pour la polymérisation ou la copolymérisation d'un ou plusieurs monomères éthyléniquement insaturés, de préférence un ou plusieurs monomères vinyliques halogénés et plus préférentiellement le chlorure de vinyle.

15. Polymère vinylique halogéné obtenu par polymérisation d'au moins un monomère éthyléniquement insaturé en présence de la composition telle que définie selon l'une quelconque des revendications 1 à 12.
